# EUROPEAN PATENT SPECIFICATION

(11) **EP 1 703 446 B1**
(45) Date of publication and mention of the grant of the patent: **02.06.2010**
(21) Application number: 06290418.0
(22) Date of filing: 15.03.2006
(51) Int. Cl.: G06K 19/06, G06K 7/016

(54) **Printing apparatus**
Druckvorrichtung
Appareil d'impression

(30) Priority: 18.03.2005 JP 2005079523
(43) Date of publication of application: 20.09.2006
(73) Proprietor: CASIO COMPUTER CO., LTD., Shibuya-ku, Tokyo 151-8543 (JP)
(72) Inventor: Sano, Masayuki, Hamura-shi Tokyo 205-8555 (JP); Kuromatsu, Tetsuya, Hamura-shi Tokyo 205-8555 (JP)
(74) Representative: Gendron, Vincent Christian

(56) References cited:
- EP-A2- 0 729 846
- GB-A- 2 098 820
- US-A- 3 811 033
- US-A- 4 567 361
- US-A- 4 936 693
- US-A- 5 036 182
- US-A- 6 062 481
- US-A1- 2002 077 976
- US-B1- 6 210 054
- US-B1- 6 501 929

## Description

The present invention relates to a bar code generating apparatus, a method for generating bar codes, a bar code reading apparatus, a method for reading out bar codes, and a bar code printing apparatus.

Bar codes are used in various fields of business, for example, to discriminate commodity codes. To read out the bar code, information reading apparatuses such as a bar code reader are used.

Further, mobile information devices such as a handy terminal with a printing function are often used in ticketing business to issue passports. These mobile information devices use printing sheets. Sometimes, various sorts of bar codes are previously recorded on the rear surface of the printing sheet as identification information for the purpose of recording and managing such ticketing business. A mobile information device is proposed, which employs a sheet detecting sensor for detecting the printing sheet to read out bar codes. (Refer to Japanese Laid-open Patent Specification No. 2001-14279)

However, when such mobile information device is used in the ticketing business, it is necessary to read out the bar codes recorded on the recording sheet in addition to the printing operation, which will increase troublesome and inconvenient burden.

Using the technology described in Japanese Laid-open Patent Specification No. 2001-14279, it is possible to read out bar codes only with the mobile information device, but no description is given in the specification on usage of the mobile information device together with a printing device. The mobile information device cannot be used to read out bar codes and for the ticketing operation simultaneously. Further, no special description is given on the bar codes themselves and reading out the bar codes in the above specification. In the mobile information device, information could not be read out precisely due to an error caused during a printing-sheet conveying operation.

Most of the printing sheet used in the ticketing business spare only a small area for printing information, and therefore it is hard for the bar code in conformity with the conventional standard to represent adequate information. For example, since the bar code in conformity with ITF (Interleave Two of Five Standard) represents one character with five bars, the number of bars increases in units of five bars as information volume increases.

US 4,567,361 discloses a bar code with a first quiet zone, a sync mark, a start code, the actual bar code data, a check character, a stop code, another sync mark, and a second quiet zone. The bar code data consists of cells (with fixed width) where each cell starts with a white space and ends with a black mark. The data are provided as a binary code (either black or white).

More details on this type of bar code can be found in US 2002/0 077 976, in particular in paragraphs [0059] and [0070] which disclose another bar code consisting of a quiet zone, a start character, the bar code symbols (binary elements that are parity checked after each bar code symbol), a check symbol (at message level), a stop character, and finally another quiet zone.

US 3,811,933 shows a binary bar code and explicitly discloses the provision of a space between the data bars.

US 5,036,182 discloses a bar code with spaces between the bar code characters (see Fig. 6 and corresponding part of the description).

US 4,936,693 deals with a thermal bar code printer with a data input keyboard.

From US 6,501,929 a high performance print system consisting of two printers (two colors or front/backside) is known. The first printer generates control data and passes them (via a FIFO buffer) to the second printer. A synchronisation mark (e.g. a bar code) is generated by the first printer and read by a sensor at the second printer for image alignment. Page information is verified in a page by page manner by determining adherence to a predetermined rule.

EP 0 729 846 discloses a method of controlling the physical alignment of printheads in an ink jet printer (continuous ink jet): One or two reference marks are printed by the upstream print head for spatial correction (e.g. due to heating) at sequential color printing.

In US 6,210,054, several registration marks are printed over an adhesive layer affixed to a recording layer in a web of label stock driven in a given direction, so that the registration marks are separated by predetermined distances. Several perforation lines are formed corresponding to the registration marks on the label stock wound in the roll.

The present invention provides a technology which is capable of generating a bar code representing more information with a short bar code length, and improves precision of reading the bar code.

The invention is defined by the independent claims.

Preferred embodiments are set out in the dependent claims.

In the bar code generating apparatus, binary codes indicating one or plural numerals are represented by a data bar portion including data bars each having a fixed width corresponding to the binary code. A numeral can be represented by the number of the bars corresponding to the digit number of the binary code, and therefore more data volume or more information volume can be represented by a shorter bar code length.

The bar code data contains a parity code for detecting an error in the bar code portion. Using the parity code, consistency of the data bar portion can be tested.

Space bars are provided between the data bars such that the width of the data bar portion becomes smaller than the width of the marker portion. Therefore, the data bar portion can be clearly separated form the marker portion, whereby confusion of these two portions is avoided.

In the bar code recoding apparatus, every time when the recording medium with the bar code data recorded thereon is conveyed by a predetermined length, the bar code data is detected. The sensor value corresponding to the central position of each of bars forming the bar code data is compared with the threshold value to judge whether the bar is of a white pattern or of a black pattern. The data bar portion contained in the bar code data is decoded based on the result of the judgment. In this way, since it is judged based on the sensor value corresponding to the central portion of each bar, whether the bar is of a white pattern or of a black pattern, the judgment is made precisely, improving precision of reading the sensor values.

Further, a sampling interval for sampling the sensor value is subdivided by a predetermined number, and an approximate correction value for the subdivided interval is calculated and used as a sensor value. Therefore, the number of the sensor values is increased imaginarily, whereby a round off error of the sensor value can be minimized.

Since the threshold value is determined on the basis of the of the minimum local-maximal value and the maximum local-minimal value, a value corresponding to precision of reading the sensor value is used as the threshold value for discriminating a code pattern "white" or "black".

In the printing apparatus, the ticketing information is recorded in the location on the recording medium following the location where the marker portion is recorded and the bar code portion recorded on the location following the location where the marker portion is recorded is read out. Therefore, the bar-code reading operation and the printing operation of the ticket can be performed simultaneously.

Further, since the ticketing information is made to associate with the information represented by the data bar portion of the bar code data corresponding to the ticketing information and is stored on the memory, the ticketing operation is recorded and managed without failure.
FIG. 1 is a block diagram of a functional structure of a bar code generating apparatus according to the present invention.
FIG. 2 is a flow chart of a bar code generating process.
FIG. 3 is a view illustrating an example of a bar code generated in the bar code generating process.
FIG. 4 is a view schematically illustrating a structure of a printing apparatus.
FIG. 5 is a block diagram of a functional structure of the printing apparatus.
FIG. 6 is a flow chart of a bar code reading process.
FIG. 7 is a flow chart of a data subdivision process.
FIG. 8 is a view showing an example of a sensor value.
FIG. 9 is a flow chart of an extreme value specifying process.
FIG. 10 is a view for explaining a white/black pattern discriminating process.

The preferred embodiments of the present invention will be described with reference to the accompanying drawings. The scope of claims of the present invention shall by no means be restricted to the embodiments to be described hereinafter with reference to the accompanying drawings.

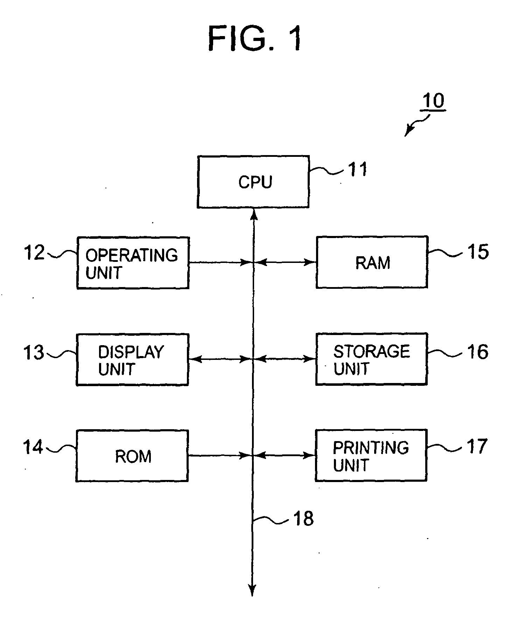

Referring to FIG. 1, a bar code generating apparatus 10 for generating bar codes, which is used in the present invention will be described. FIG. 1 is a block diagram showing a functional configuration of the bar code generating apparatus 10.

As shown in FIG. 1, the bar code generating apparatus 10 comprises CPU (Central Processing Unit) 11, operating unit 12, display unit 13, ROM (Read Only Memory) 14, RAM (Random Access Memory) 15, storage unit 16, and printing unit 17, all of which are connected with each other through a bus line 18.

CPU 11 uses some area of RAM 15 as a work area, and executes various sorts of control programs which are previously stored on ROM 14 and/or storage unit 16 to control operation of various elements included in the bar code generating apparatus 10. CPU 11 reads out and executes an application program stored on ROM 14 and/or on the storage unit 16 in accordance with a control signal input through the operation unit 12, whereby various sorts of functions of the bar code generating apparatus 10 are performed.

As will be described later, CPU 11 converts one or plural pieces of numerical data entered by the user through operating unit into binary codes, and generates bar code data on the basis of the generated binary codes.

The operating unit 12 comprises a mouse and a key board having numeral input keys and keys corresponding to various functions. When the user operates or presses either of the keys of the key board, the operating unit 12 outputs to CPU 11 a press signal (control signal) corresponding to the operated or pressed key.

The display unit 13 comprises CRT (Cathode Ray Tube), LCD (Liquid Crystal Display), or the like, and displays an image on a display device on the basis of display data supplied from CPU 11.

ROM 14 serves to store a system program for the bar code generating apparatus 10, and application programs and data used to operate the embodiment.

RAM 15 serves as the work area for temporarily storing various sorts of programs to be executed by CPU 11 and data relating to these programs.

The storage unit 16 has recording medium (not shown) on which the programs and data are previously recorded. The recording medium comprises a magnetic or optical recording medium, or a semi-conductor memory. The recording medium is fixedly provided on the storage unit 16, or detachably installed on the bar code generating apparatus 10. On the recording medium are recorded the system program, various sorts of process programs corresponding to the system program, and data processed in accordance with the process program. These programs are stored in computer-readable program code form, and CPU 11 successively operates in accordance with these program codes.

The printing unit 17 prints a bar code on a recording medium or on a recording sheet P in response to a control operation of CPU 11. Printers of various printing systems such as thermal printer, laser printer, ink- jet printer, and the like may be used as the printing unit 17, and also recording sheets corresponding to the printing system may be used.

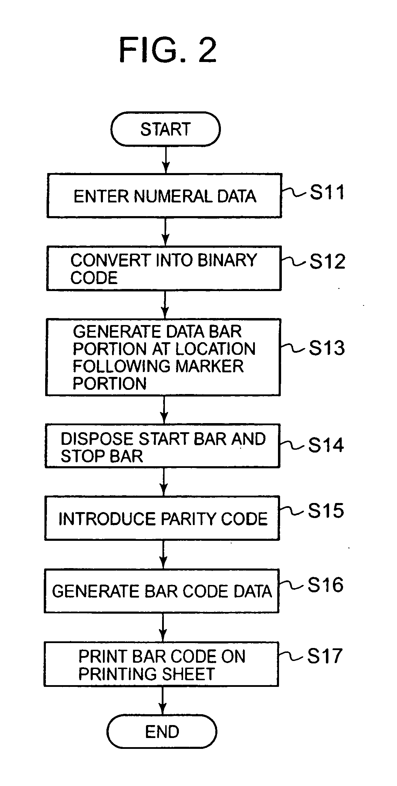

Now, a bar code generating process executed by the bar code generating apparatus 10 will be described with reference to FIG. 2. FIG. 2 is a flow chart of a process which is executed in a software process performed by CPU 11 of the bar code generating apparatus 10 in accordance with a certain program stored on ROM 14 and storage unit 16.

When numerical data is entered from the operating unit 12 at step S11, the numerical data is converted into a binary code at step S12. A data-bar portion which contains bars each having a fixed width is produced at a location following a marker portion indicating a position from which a reading operation starts at step S13.

If a width of a data-bar portion is larger than that of the marker when data bars are produced, a space bar is inserted between certain data groups such that the width of data-bar portion becomes smaller than that of the marker portion. Since the space bar is disposed to make the width of data-bar portion smaller than that of the marker, the data bar portion is clearly distinguished from the marker portion and therefore confusion between the data-bar portion and the marker portion can be avoided.

A start bar indicating the leading position of the data bar is provided between the data-bar portion and the marker portion with a certain space left between them, and a stop bar indicating the end position is also disposed at the end of the data-bar portion at step S14.

A parity code is introduced to detect an error of the data bar at step S15, and a parity bar indicating the parity code is added to complete the bar code data at step S16.

Then, the bar code data is recorded on the recording sheet P at step S17, and the bar code generating process finishes.

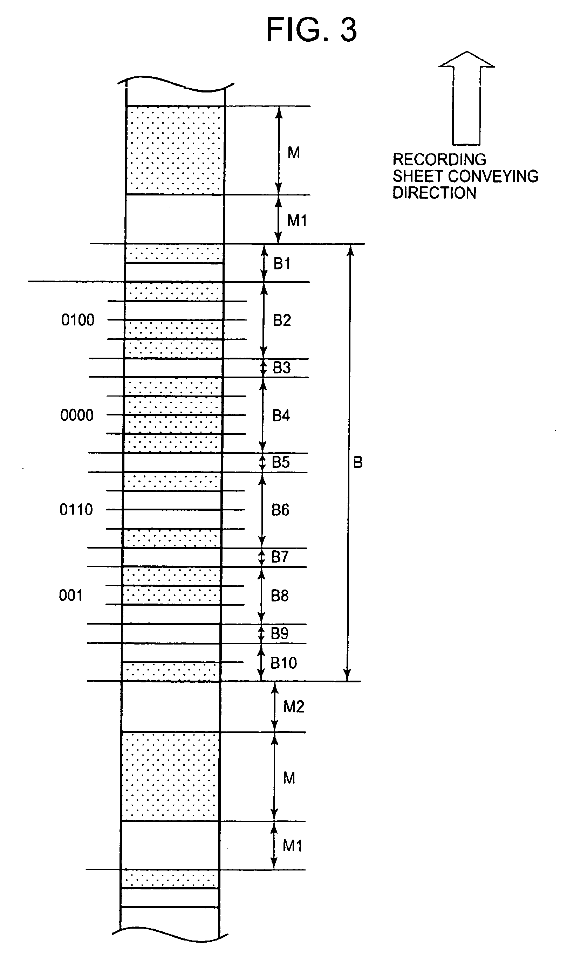

FIG. 3 is a view illustrating an example of the bar code data generated in the bar code generating process shown in FIG. 2 and recorded on the recording sheet P.

As shown in FIG. 3, the bar code B is recorded in the location following the marker portion M, and a margin M1 is provided between the marker portion M and the bar code B to separate them. A width of the margin M1 can be selected arbitrarily, but is preferably larger than a width of the bar contained in the bar code B. Further, a width of the marker portion M can be selected arbitrarily, but is preferably larger than the width of the bar contained in the bar code B. The recording sheet P is conveyed in the direction shown by an arrow in FIG. 3. In other words, the recording sheet P is conveyed in one-way direction from the marker portion toward the stop bar.

The bar code B comprises a start bar B1, data bar B2, space bar B3, data bar B4, space bar B5, data bar B6, space bar B7, data bar B8, parity bar B9, and stop bar B10, as shown in FIG. 3. Each bar shall have an even fixed width, and such bar can be set to an arbitrary width. The bar printed in black represents a numeral of "0", and the bar printed in colorless represents a numeral of "1". The bar printed in colorless denotes the bar which is printed in white on the recording sheet P by the printing unit 17, or the bar which is in an unpigmented state on the recording sheet P.

As illustrated in FIG. 3, the start bar B1 is represented by "01" , and the stop bar B10 is represented by "10". Between the start bar B1 and stop bar B10, there are disposed the data bar B2 of "0100", space bar B3 of "1", data bar B4 of "0000", space bar B5 of "1", data bar B6 of "0110", space bar B7 of "1", data bar B8 of "001", and parity bar B9 of "1".

The example in which numeral data of "64" and numeral data of "49" are entered is shown in FIG. 3. The data-bar portion (hereinafter, "D1"), "01000000" consisting of data bars B2 and B4 represents a number of "64", and the data-bar portion (hereinafter, "D2"), "0110001" consisting of data bars B6 and B8 represents a number of "49". Since the data-bar portions D1, D2 contain the space bars B3 and B7 inserted between certain data groups, respectively, the widths of the data-bar portions D1, D2 are smaller than the width of the marker portion M. The space bar B5 is inserted to separate the data-bar portion D1 from the data bar portion D2, and shall be inserted at every segment of entered numerical data to separate one piece of numerical data from the other.

The parity bar B9 serves to indicate whether the even or odd number of black bars or numerals of "0" are contained in the bar code B. When the even number of black bars are contained in the bar code B, the parity bar B9 is represented in "white" or by the numeral of "1". On the contrary, when the odd number of black bars are contained in the bar code B, the parity bar B9 is represented in "black" or by the numeral of "0". In the example of the bar code shown in FIG. 3, since the parity code is introduced, covering the bars ranging from the start bar B1 to data bar B8, the even number of bars are contained, and the parity bar is represented in "white", indicating the numeral of "1". In the example, the parity code covers the bars ranging from the start bar B1 to the data bar B8, but a modification may be made such that the parity code covers the bars ranging from the data bar B2 to the data bar B8, excluding the star bar B1, and that the parity bar B9 is introduced based on such parity code.

In the example of FIG. 3, data of 15 bits is represented by 23 pieces of bars. When the resolution of a sheet sensor 33 to be described later is 1.5 mm, the bar code will be 34.5 mm long. Compared with the present example, when the same data is represented by a bar code in conformity with the conventional ITF Standard, the bar code length will be 75.0 mm, and therefore the bar code of the present invention can represent the same data volume by not more than 50 % of the conventional bar code length.

As described above, since a binary code representing one or plural numbers is represented by the data-bar portion consisting of bars each having a fixed width corresponding to the binary code, a number can be represented by the number of bars corresponding to the digit numbers of the binary code and more data volume can be represented by less bar code length.

Further, the bar code data includes the parity code for detecting an error in the bar-code portion, consistency of the data-bar portion can be checked.

Since the space bar(s) is included in the data code to make the data-bar portion smaller in width than the marker portion, the data-bar portion and the marker portion can be clearly separated, preventing erroneous detection.

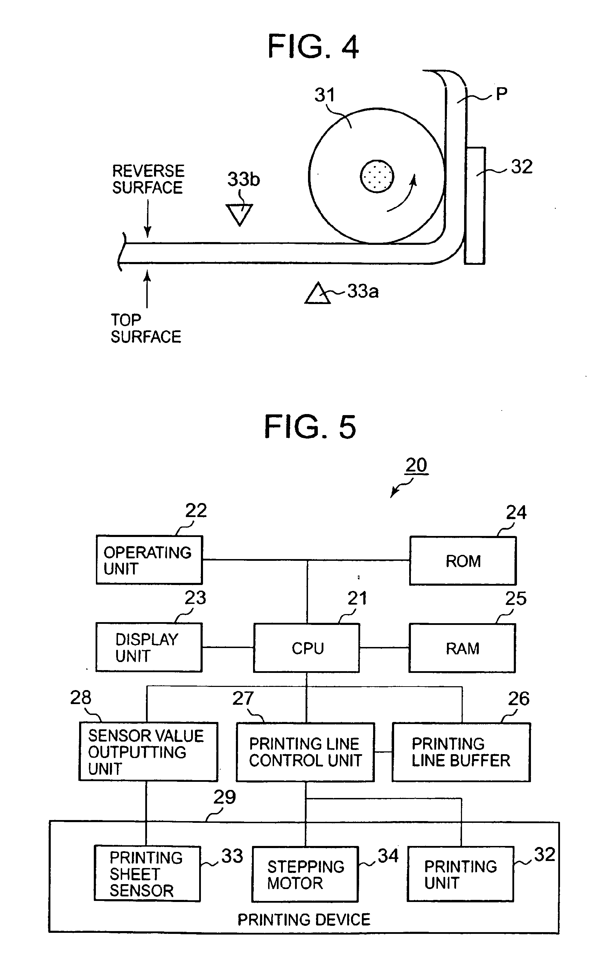

Now, referring to FIG. 4, a printing apparatus 20 will be described, which is equipped with a bar-code reading device for reading a bar code generated by the above bar code generating apparatus 10.

FIG. 4 is a view schematically showing the structure of the printing apparatus 20.

The printing apparatus 20 is equipment used in ticketing services for issuing passports and the like. As illustrated in FIG. 4, the printing apparatus 20 comprises a platen roller 31, printing unit 32, and printing sheet sensor 33. The recording sheet P is wound around a core and kept in a roll state. Ticketing data relating to the ticketing services is recorded on the top surface of the recording sheet P, and data to be used to record and manage the ticketing business is continuously recorded in the above bar-code form (including the marker) on the reverse surface of the recording sheet P. The bar codes shall contain different information, respectively. The bar codes are recorded on the reverse surface of the recording sheet P in the present embodiment, but may be recorded on the top surface of the recording sheet.

The platen roller 31 is driven in the direction as shown by an arrow in FIG. 4 by conveying means including a stepping motor 34 (Refer to FIG. 5), and transports the recording sheet P every unit of 1 dot line, which corresponds to printing resolution of the printing unit 32.

To issue a ticket, the printing unit 32 records or prints certain ticketing information on the top surface of the recording sheet P, which is transported every unit of 1 dot line as described above. A recording start position (marker start position) from which recording of the ticketing information starts is decided based on the marker which is detected on the reverse surface of the recording sheet P by a reverse-surface sheet sensor 33b to be described later. The ticketing information is recorded within an area on the top surface of the recording sheet P specified by the marker start position and the following marker start position both provided on the reverse surface of the recording sheet P. In the present embodiment, the printing unit 32 employs a thermal printing head but other printing system may be used in place of it.

The sheet sensor 33 comprises a top-surface sheet sensor 33a and the reverse-surface sheet sensor 33b.

The top-surface sheet sensor 33a comprises an optical sensor such as a photo-coupler, photo-interrupter and the like. The top-surface sheet sensor 33a detects the recording sheet P transferred thereto to generate a detection signal, and outputs the detection signal to CPU 21 through a sensor value outputting unit 28 to be described later (Refer to FIG. 5).

Similarly to the top-surface sheet sensor 33a, the reverse-surface sheet sensor 33b comprises an optical sensor such as a photo-coupler, photo-interrupter and the like. The reverse-surface sheet sensor 33b detects a light reflected on the marker or the black and white pattern of the bar code recorded on the reverse surface of the printing sheet P passing through the reverse-surface sheet sensor 33b to generate a detection signal, and outputs the detection signal to CPU 21 through the sensor-value outputting unit 28 (Refer to FIG. 5).

A functional configuration of the printing apparatus 20 will be described referring to FIG. 5.

As shown in FIG. 5, the printing apparatus 20 comprises CPU 21, operating unit 22, display unit 23, ROM 24, RAM 25, printing line buffer 26, printing line control unit 27, sensor value outputting unit 28, and printing device 29.

CPU 21 uses a certain area of RAM 25 as the work area, and executes various control programs previously stored on ROM 24 to control operations of elements of the printing apparatus 20. CPU 21 is arranged to read out and execute the application program recorded on ROM 24 in response to the control signal input through the operation unit 22, realizing the various functions of the printing apparatus 20.

When it is determined on the basis of the sensor value output from the sheet sensor 33 (reverse-surface sheet sensor 33b) of the printing device 29 that the marker printed on the recording sheet P has been detected, CPU 21 controls the printing line control unit 27 to print ticketing information on the top surface of the recording sheet P.

CPU 21 stores on RAM 25 the sensor value output from the sheet sensor 33 (reverse-surface sheet sensor 33b) of the printing unit, and decodes the data-bar portion contained in the bar code data based on the stored sensor value. Further, CPU 21 makes the decoded value associate with the ticketing information which is recorded when the above bar code data is read out, and stores on RAM 25 the decoded value associated with the ticketing information.

The operating unit 22 comprises a key board having numeral keys and other keys corresponding respectively to various functions, and outputs to CPU 21 a pressed-key signal in response to a key operation by the user.

The display unit 23 comprises a display device using CRT (Cathode Ray Tube), LCD (Liquid Crystal Display), or the like, and displays an image on the display device based on display data supplied from CPU 21.

ROM 24 stores the system program and application programs for the printing apparatus 20 and further programs and data for realizing the functions of the present embodiment. In case where the bar codes recorded on the recording sheet P are in conformity with the previously determined rule, setting data relating to the rule is stored on ROM 24.

RAM 25 serves as a work area for temporarily storing various programs to be executed by CPU 21 and the related data. Further, RAM 25 stores sensor values of the sheet sensor 33 transferred from CPU 21. Decoded values of the data - bar portion are made to associate with the ticketing information transferred from CPU 21, and stored on RAM 25.

The printing line buffer 26 temporarily stores printing data supplied from CPU 21, and outputs the printing data to the printing device 29 under control of the printing line control unit 27.

The printing line control unit 27 outputs to the printing device 29 every dot line the printing data stored on the printing line buffer 26, and makes the printing unit 32 generate heat in synchronize with the movement of the stepping motor 34 to print one dot line of the printing data.

Further, the printing line control unit 27 outputs a signal notifying the completion of one dot-line printing to CPU 21 every time when the printing device 29 has finished printing of one dot-line data.

The sensor-value outputting unit 28 performs predetermined processes including A/D conversion process on the detection signal generated by the sheet sensor 33 in the printer unit 32, and outputs a sensor value to CPU 21.

The printer device 29 comprises the printing unit 32, sheet sensor 33, and stepping motor 34. The printer unit conveys the printing sheet P to print data thereon under control of the printing line control unit 27.

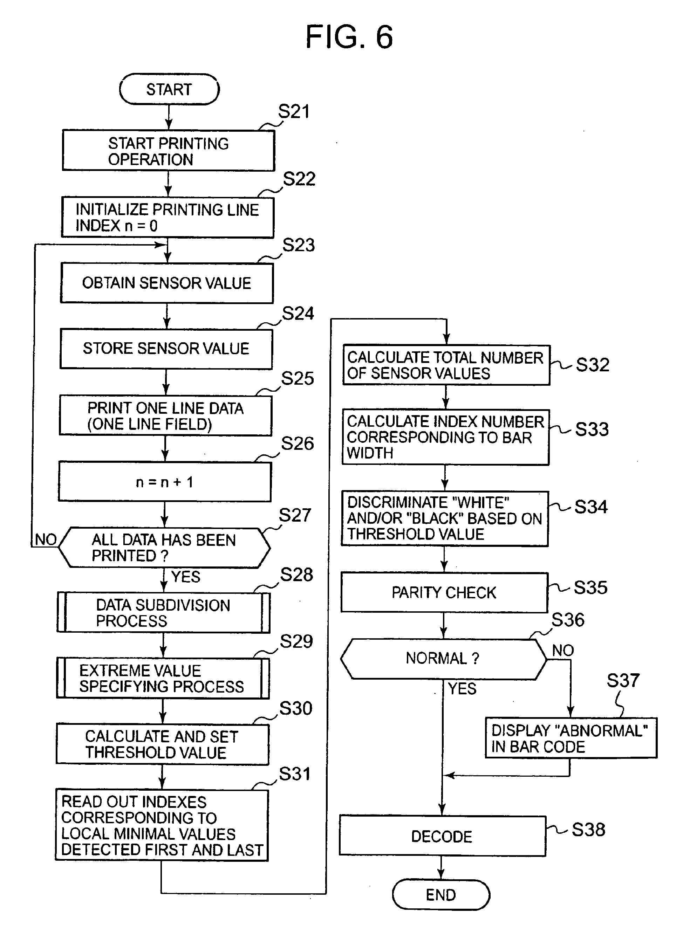

Now, a bar code reading process executed by the printing apparatus 20 will be described with reference to the flow chart shown in FIG. 6. CPU 21 in the printing apparatus 20 executes the program stored on ROM 24 to perform the software process, whereby the process shown in FIG. 6 is performed.

When the user operates the operating unit 22 to enter a signal for issuing a ticket, the recording sheet P is conveyed toward the printing unit 32 in response to the signal, and the marker printed on the reverse surface of the recording sheet P is detected based on the sensor value output from the sheet sensor 33 (reverse-surface sheet sensor 33b). Then, a printing operation starts printing ticketing information in the location on the top surface which follows the location on the reverse surface where the marker portion is printed (at step S21), and a printing line index (hereinafter, "index") "n" is initialized to "0" at step S22. The index corresponds to the number of times of one dot-line printing by the printing unit 32.

The sheet sensor 33 obtains a sensor value at step S23, and this sensor value is made to associate with the index "n" and then stored on RAM 25 at step S24.

The printing line control unit 27 controls the printing unit 32 to print one line data (one line field) of the ticketing information on the printing sheet P, and outputs a signal indicating that printing of one dot-line data has been completed. Upon generation of such signal, the index is incremented to "1" at step S26.

Then, it is judged at step S27 whether all the data of the ticketing information has been printed or not. When it is determined at step S27 that all the data of the ticketing information has not yet been printed (NO at step S27), the stepping motor 34 is driven to convey the printing sheet P by a length corresponding to one dot line, and the operation returns to step S23, again.

Meanwhile, when it is determined at step S27 that all the data of the ticketing information has been printed (YES at step S27), the operation advances to step S28, where a data subdivision process is performed to subdivide the sensor value stored on RAM 25.

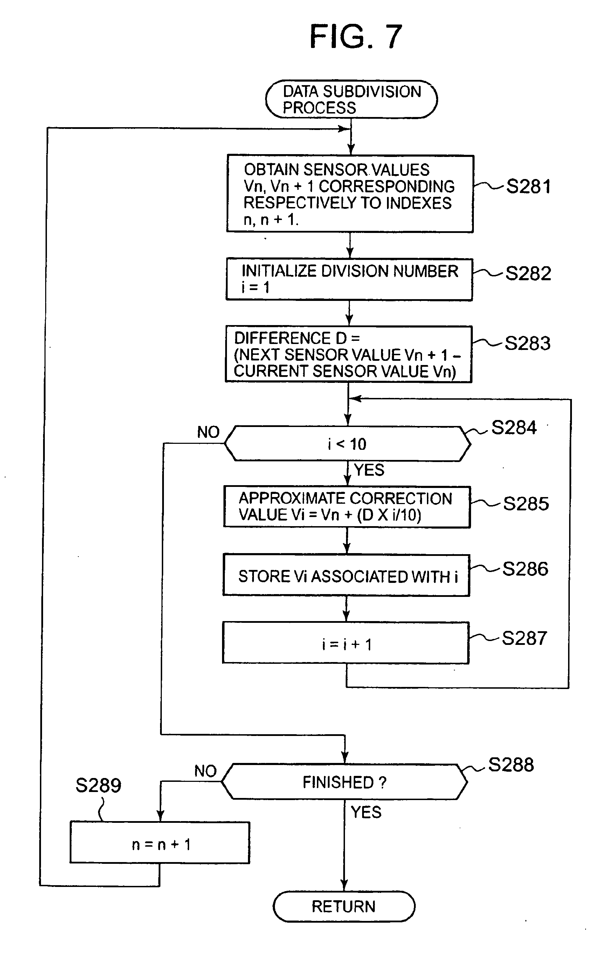

Referring to FIG. 7, the data subdivision process to be performed at step S28 will be described. The data subdivision process is performed to subdivide a sampling interval in each period of the index to obtain approximate correction values between adjacent sensor values stored on RAM 25 and to imaginarily increase the number of the sensor values by the number of the approximate correction values. In the present embodiment, the sampling interval in each period of index is subdivided into ten (10), but such sampling interval may be subdivided into an arbitrary number other than the number of ten.

Note that the data subdivision process shall be performed on a premise that the sensor values are successively be read out from RAM 25 in ascending order of the indexes associated with the sensor values.

First, sensor values Vn and Vn+1 corresponding respectively to the indexes "n" (for example, n = 0) and "n+1" (for example, n = 1) are obtained and subjected to the data subdivision process at step S281. A division number "i" representing an indicator of the subdivision is initialized to "1" at step S282.

At the following step S283, a difference "D" between the sensor value Vn corresponding to the index "n" and the sensor value Vn+1 corresponding to the index "n+1" is calculated as follows: D = (Vn+1) - (Vn). It is judged at step 5284 whether or not the division number "i" is less than a value of "10".

When it is determined at step S284 that the division number "i" is less than the value of "10" (YES at step S284), an approximate correction value Vi at the division number "i" is calculated, at step S285, using the following equation: Vi = Vn + (D X i/10). The approximate correction value Vi is made to associates with the division number "i" and stored on RAM 26 at step S285. The division number "i" shall be associated with the index to be subdivided. For instance, when the approximate correction value between the indexes "1" and "2" is calculated, the index values are multiplied by 10, respectively, whereby indexes "10" and "20" are obtained, and the division number "i" between these indexes "10" and "20" is used as the indexes "11" and "19", and then, approximate correction values at respective division numbers may be stored as sensor values.

Then, the division number "i" is incremented to "1" at step S287, and the operation returns to step S284 again.

Meanwhile, when it is determined at step S284 that the division number "i" is larger than the value of "10" (NO at step S284), the operation advances to step S288, where it is judged whether or not the data subdivision process has been performed with respect to every index. When it is determined at step S288 that the data subdivision process has not yet been performed with respect to every index (NO at step S288), the following index "n+1" is set to the initial index "n" to be subjected to the subdivision process at step S289. Then, the operation returns to step S281 again. When it is determined at step S288 that the data subdivision process has been performed at every index (YES at step S288), the data subdivision process finishes, and the operation returns to step S29 in FIG. 6.

As described above, the sampling interval for sampling the sensor value is subdivided by a predetermined number, and approximate correction values corresponding respectively to the subdivided intervals are calculated and used as sensor values for such subdivided intervals. Therefore, the number of the sensor values can be increased imaginarily, whereby a round off error of the sensor value can be minimized.

Returning to FIG. 6, an extreme value specifying process will be described. The extreme value specifying process is executed at step S29 to specify the minimum local-maximal value and the maximum local-minimal value among all the sensor values stored on RAM 25.

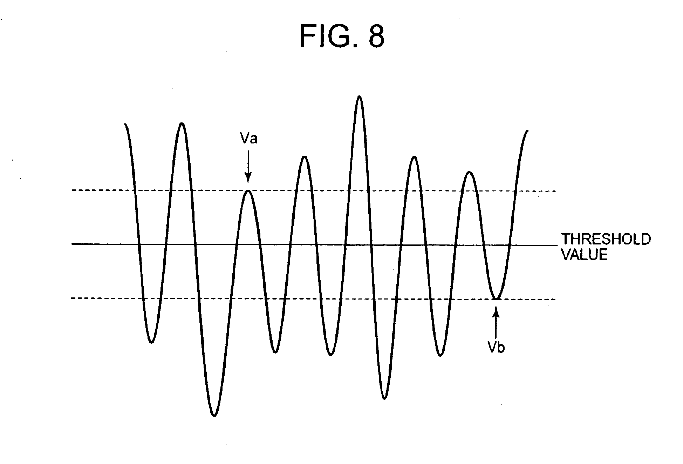

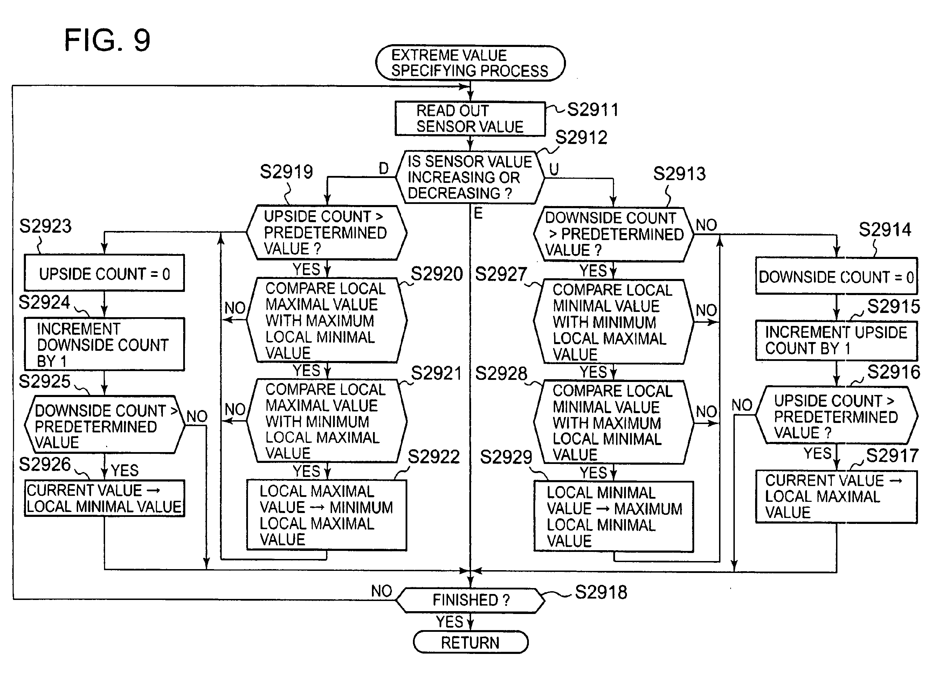

Now, the extreme value specifying process to be performed at step S29 will be described with reference to FIG. 8 and FIG. 9.

FIG. 8 is a view showing a sample of the sensor values stored on RAM 25.

In FIG. 8, a symbol "Va" denotes the minimum local-maximal value which is the minimum value among the local maximal values (convex upward points), and a symbol "Vb" denotes the maximum value among the local-minimal values (convex downward points). Note that the local maximum values denote white areas in the bar code B, and the local minimum values denote black areas in the bar code B.

FIG. 9 is a flow chart of the extreme value specifying process.

The extreme value specifying process is performed on the premise that the sensor values are successively read out from RAM 25 in the ascending order of the indexes. The sensor values subdivided in the data subdivision process (step S28) are included in the sensor values to be processed in the extreme value specifying process. But the subdivided sensor values are not always included in the sensor values to be processed in the present extreme value specifying process.

When the sensor values have been read out from RAM 25 at step S2911 in FIG. 9, a difference between the sensor value (current sensor value) which has been just read out and the sensor value (prior sensor value) which is read out immediately before is calculated, and it is judged depending on the calculated difference at step S2912 whether the sensor value is in an increasing tendency or in a decreasing tendency.

A series of processes are performed in the extreme value specifying process. In particular, a process in which the minimum local-maximal value is specified will be described.

When it is determined that the sensor value is in the increasing tendency (Upside at step S2912), it is judged at step S2913 whether or not a downside count is larger than a predetermined value, for example, a value of "5". When it is determined that the downside count is not larger than the predetermined value (NO at step S2913), the downside count is initialized to "0" at step S2914, and an upside count is incremented by "1" at step S2915. Then, it is judged at step S2916 whether or not the upside count has exceeded the predetermined value. The predetermined value used as the criterion for judgment to be made at step S2913 and step S2914 may be set arbitrarily, but it is preferable that such predetermined value does not exceed the number of the sampling points (including the number of subdivided sensor values).

When it is determined that the upside count has exceeded the predetermined value (YES at step S2916), then the current sensor value is stored on RAM 25 as the local maximal value at step S2917, and the operation advances to step S2918. When it is determined at step S2916 that the upside count is smaller than the predetermined value (NO at step S2916), the operation returns to step S2918 immediately.

At step S2918, it is judged whether the process for specifying the minimum local-maximal value has been finished with respect to every sensor value stored on RAM 25. When it is determined at step S 2918 that the process for specifying the minimum local-maximal value has not been finished with respect to every sensor value stored on RAM 25 (NO at step S2918), the operation returns to step S2911, where the following sensor value is read out. In other words, when the sensor vale is in the increasing tendency, the processes at steps 2914 to 2917 are performed repeatedly. When it is determined at step S 2918 that the process for specifying the minimum local-maximal value has been finished with respect to every sensor value stored on RAM 25 (YES at step S2918), then the operation returns to step S30 in FIG. 6.

When it is determined that the sensor value which has just been read out is smaller than the sensor value previously read out (Downside at step S2912), it is judged at step S2919 whether or not the upside count is larger than the predetermined value. When it is determined that the upside count is not larger than the predetermined value (NO at step S2919), the operation advances to step S2923.

When it is determined that the upside count is larger than the predetermined value (YES at step S2919), then it is judged at step S2920 whether or not a difference between the local maximal value and the maximum local-minimal value to be described below is larger than the predetermined value. When it is determined that the difference is not larger than the predetermined value (NO at step S2920), the operation advances to S2923. When it is determined that the difference between the local maximal value and the maximum local-minimal value is larger than the predetermined value (YES at step S2920), the local maximal value is compared with the minimum local-maximal value to be described later. When it is determined that the local maximal value is not smaller than the minimum local-maximal value (NO at step S2921), the operation advances to step S2924.

Meanwhile, it is determined at step S2921 that the local maximal value is smaller than the minimum local-maximal value (YES at step S2921), such local maximal value is stored as the minimum local-maximal value on RAM 25, and the operation advances to step S2923.

When the process for specifying the minimum local-maximal value is performed with respect to every sensor value, then the minimum local-maximal vale is specified. At step S2920, the local maximal value and the maximum local-minimal value are compared, but the judgment is made at step S2920 based on the premise that the local maximal value is larger than the maximum local minimal-value (the local maximal value > the maximum local minimal-value). When it is determined that the local maximal value is smaller than the maximum local minimal-value, such local maximal value is considered to be noise or error in the detection. Therefore, the judgment made at step S2920 will eliminate error in the detection.

Now, among a series of processes performed to specify the extreme value, a process for specifying the maximum local-minimal value will be described.

When it is determined at step S2912 that the sensor value is decreasing (Downside at step S2912), it is judged at step S2919 whether or not an upside count is larger than the predetermined value. When it is determined that the upside count is not larger than the predetermined value (NO at step S2919), the upside count is initialized to "0" at step S2923, and the downside count is incremented by "1" at step S2924. Then, it is judged at step S2925 whether or not the downside count has exceeded the predetermined value. When it is determined that the upside count has exceeded the predetermined value, the operation advances to step S2920, as described above.

When it is determined at step S2925 that the downside count is larger than the predetermined value (YES at step S2925), the current sensor value is stored as the local minimal value on RAM 25 at step S2926 and the operation advances to step S2927. Meanwhile, when it is determined at step S2925 that the downside count is not larger than the predetermined value (NO at step S2925), the operation advances directly to step S2918. In other words, while the sensor value is decreasing, the processes at steps S2923 to S2926 are performed repeatedly.

When it is determined at step S2912 that the current sensor value is larger than the previously read-out sensor value (Upside at step S2912), it is judged at step S2913 whether or not the downside count is larger than the predetermined value. When it is determined that the downside count is larger than the predetermined value (YES at step S2913), the operation advances to step S2927. Meanwhile, when it is determined that the downside count is not larger than the predetermined value (NO at step S2913), the operation advances to step S2914, as described above.

At step S2927, it is judged whether or not a difference between the local minimal value and the minimum local-maximal value is larger than the predetermined value. When it is determined at step S2927 that the difference is not larger than the predetermined value (NO at step S2927), the operation advances to step S2914.

Meanwhile, when it is determined at step S2927 that the difference between the local minimal value and the minimum local-maximal value is larger than the predetermined value (YES at step S2927), the local minimal value and the maximum local-minimal value are compared. When it is determined that the local minimal value is not larger than the maximum local-minimal value (NO at step S2928), the operation advances to step S2913.

When it is determined at step S2928 that the local minimal value is larger than the maximum local-minimal value (YES at step S2928), the local minimal value is stored as the maximum local-minimal value on RAM 25, and the operation advances to step S2913.

When the above processes have been performed with respect to every sensor value, the maximum local-minimal value is specified. At step S2927, the local minimal value and the minimum local-maximal value are compared, but the judgment is made on the premise that the local minimal value is larger than the minimum local-maximal value (the local minimal value < the minimum local-maximal value). When the local minimal value is larger than the minimum local-maximal value, such local minimal value is considered to be noise or error in the detecting operation. Therefore, the judgment made at step S2927 will eliminate error in the detecting operation.

When it is determined at step S2912 that the current sensor value is equivalent to the sensor value read out just previously (E at step S2912), the operation returns to step S2918, where it is judged whether or not the present processes have been performed with respect to all the sensor values stored on RAM 25. When the present processes have been performed with respect to all the sensor values (YES at step S2918), the operation advances to step S30 in FIG. 6.

At step S30 in FIG. 6, an average value of the minimum local-maximal value and the maximum local-minimal value specified at step S29 is calculated based on the equation as follows: (average value) = [(minimum local-maximal value) + (maximum local-minimal value)]/2. The calculated average value is set as the threshold value at step S30, depending on which the bar code data is discriminated as "white" or "black". As described, since the threshold value is determined on the basis of the of the minimum local-maximal value and the maximum local-minimal value, a value corresponding to precision of reading the sensor value is used as the threshold value for discriminating a code pattern "white" or "black".

The indexes corresponding respectively to the local minimal value detected first and local minimal value detected last among the sensor values stored on RAM 25 at step S29 are read out at step S31. The value of the index (hereafter, "Ls") corresponding to the local minimal vale detected first corresponds to the number of the printing lines located at the center of the start bar (black bar) of the bar code B shown in FIG. 3. A value of the index (hereafter, "Ll") corresponding to the local minimal vale detected last corresponds to the number of the printing lines located at the center of the stop bar (black bar) of the bar code B shown in FIG. 3.

The total number T of the sensor values detected between "Ls" and "L1" is calculated from the following equation: T = L1 - Ls. The total number Tb of the sensor values including the approximate correction values is obtained by multiplying T by the division number of "10" used in the subdivision process at step S28. In the present process, since the sensor value is divided into ten (10) at step S28, the total number T of the sensor values is multiplied by ten (10) to obtain the total number Tb of the sensor values including the approximate correction values. In case that the value of the index is already multiplied by the division number so as to compensate the division number, the total number Tb of the sensor values including the approximate correction values may be obtained directly by calculating the difference between "Ls" and "Ll".

The number Bw of the indexes corresponding to the width of each bar is obtained by dividing the total number Tb of sensor vales by the number Bn of bars contained in the bar code B at step S33. It is discriminated based on the number Bw of the indexes at step S34 whether a pattern of each of the bars falling in the range between "Ls" and "Ll" is "white" or "black".

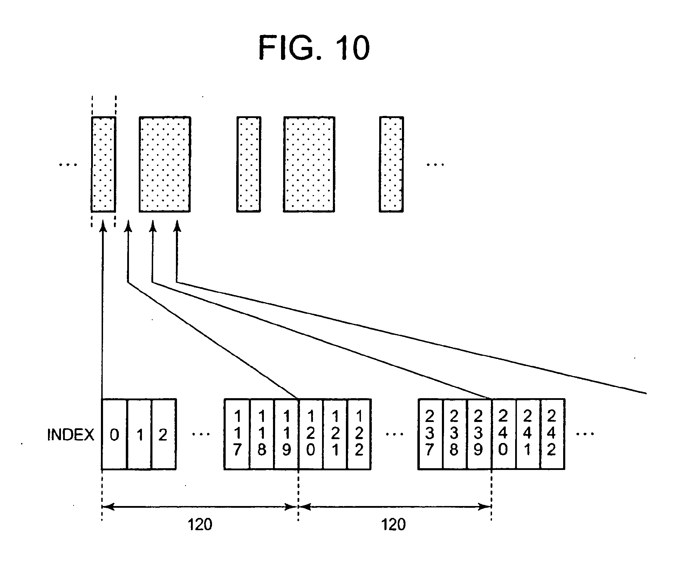

The white/black discriminating process performed at step S34 will be described in detail with reference to FIG. 10.

FIG. 10 is a view illustrating a sample of white/black discrimination where the number of index Bw is 120. As shown in FIG. 10, the index "0" corresponding to the central position of the start bar B1 is set to a start position for white/black discrimination, and it is discriminated based on the threshold value obtained at step S31, whether each of patterns at the positions corresponding respectively to the sums of index values of every 120 indexes from the start position is "white" or "black".

Since the sums of the index values of every Bw indexes correspond respectively to the central positions of the bars with respect to the index "0" corresponding to the central position of the start bar B1, every bar can be discriminated "white" or "black" without failure.

Now, we return to the flow chart of FIG. 6. A binary value represented by each bar contained in the bar code B is calculated based on the result of the judgment made at step S35, and the consistency of data of the bar code B is examined on the basis of the parity code represented by the parity bar contained in the bar code B at step S35. When the consistency of data of the bar code B is determined normal (YES at step S36), the data bar is decoded at step S38, and the present process finishes.

When an error has been detected in the data of the bar code B (NO ay step S36), an image indicating "abnormal" in the bar code B is displayed on the display unit 23 at step S37, and the data bar is decoded at step S38, and the present process finishes.

The data decoded at step S38 is recorded on the recording sheet P and made to associate with the ticketing information to be stored on RAM 25. The decoded data and the ticketing information may be made to associate with each other and stored on storing means or an external storing device. As described above, the ticketing information is made to associate with the information represented by data bar portion of the bar code data corresponding to the ticketing information and stored on the memory, whereby ticketing operation may be recorded and managed.

In the embodiment of the present invention, every time when the recording medium with the bar code data recorded thereon is conveyed by a predetermined length, the bar code data is detected. The sensor value corresponding to the central position of each of bars forming the bar code data is compared with the threshold value to judge whether the bar is of a white pattern or of a black pattern. The data bar portion contained in the bar code data is decoded based on the result of the judgment. In this way, since it is judged based on the sensor value corresponding to the central portion of the each bar whether the bar is of a white pattern or of a black pattern, the judgment is made precisely, improving the precision of the reading operation of the sensor values.

The ticketing information is recorded in the location on the recording medium following the location where the marker portion is recorded and the bar code portion recorded on the location following the position where the marker portion is recorded is read out. Therefore, the bar code reading operation and the printing operation of the ticket can be performed simultaneously.

Further, since the ticketing information which is associated with the information represented by the data bar portion of the bar code data corresponding to the ticketing information is stored on the memory, the ticketing operation is recorded and managed without failure.

The description of the embodiment of the present invention is given by way of example. Therefore, the scope of the present invention is not limited to the embodiment described above.

## Claims

1. A printing apparatus for printing ticketing information on a recording sheet (P), comprising:
an operating unit (22) for entering the ticketing information,
a display unit (23) for displaying the ticketing information entered through the operating unit,
a convey unit (34) for conveying the recording sheet (P),
a sheet sensor (33) for detecting bar codes printed on a reverse surface of the recording sheet, and
a printing unit (32) for printing the ticketing information dot-line by dot-line on the recording sheet,
**characterized in that**
said printing apparatus further comprises:
conveying means adapted to make the convey unit (34) convey the recording sheet intermittently by a length corresponding to one dot-line to be printed by the printing unit; and
a sensor-value outputting unit (28) adapted to make the sheet sensor (33) detect, every time the recording sheet is conveyed by said length, respective bar code data of a bar code printed on the reverse surface of the recording sheet; and
a control unit (21) adapted to make the printing unit (32) print the ticketing information entered through the operation unit dot-line by dot-line on a top surface of the recording sheet,
such that said printing apparatus is adapted to perform simultaneously the bar code detecting operation and the printing operation of the ticketing information.

2. The printing apparatus according to claim 1, wherein the sensor-value outputting unit (28) is adapted to make the sheet sensor (33) detect marker portions printed on the reverse surface of the recording sheet, and
the control unit (21) is adapted to make the printing unit (32) print the ticketing information within an area on the top surface of the recording sheet, wherein the area on the top surface of the recording sheet corresponds to an area which is defined on the reverse surface of the recording sheet between the marker portion detected by the sheet sensor and a following marker portion to be detected by the sheet sensor.

3. The printing apparatus according to claim 1, further comprising:
a storing unit (25) for storing information, wherein the control unit (21) is adapted to associate the ticketing information printed on the recording sheet by the printing unit (32) with the bar codes detected by the sheet sensor (33), and to store in the storing unit the ticketing information and the bar codes associated with each other.

## Patentansprüche

1. Druckgerät zum Ausdrucken von Buchungsinformationen auf einem Aufzeichnungsblatt (P), enthaltend:
eine Betätigungseinheit (22) zum Eingeben der Buchungsinformationen,
eine Anzeigeeinheit (23) zum Anzeigen der Buchungsinformationen, die durch die Betätigungseinheit eingegeben wurden,
eine Fördereinheit (34) zum Befördern des Aufzeichnungsblattes (P),
einen Blattsensor (33) zum Erfassen von Strichcodes, die auf eine Rückseite des Aufzeichnungsblattes gedruckt sind, und
eine Druckeinheit (32) zum Ausdrucken der Buchungsinformationen Punktlinie für Punktlinie auf dem Aufzeichnungsblatt,
**dadurch gekennzeichnet, dass**
das Druckgerät weiterhin enthält:
eine Fördereinrichtung, die dazu eingerichtet ist, die Fördereinheit (34) zu veranlassen, das Aufzeichnungsblatt intermittierend um eine Länge entsprechend einer Punktlinie zu befördern, die von der Druckeinheit gedruckt werden soll; und
eine Sensorwert-Ausgabeeinheit (28), die dazu eingerichtet ist, den Blattsensor (33) jedesmal, wenn das Aufzeichnungsblatt um diese Länge befördert wird, zu veranlassen, entsprechende Strichcodedaten eines Strichcodes zu erfassen, der auf die Rückseite des Aufzeichnungsblattes gedruckt ist; und
eine Steuereinheit (21), die dazu eingerichtet ist, die Druckeinheit (32) zu veranlassen, die Buchungsinformationen, die durch die Betätigungseinheit eingegeben wurden, Punktlinie für Punktlinie auf eine Oberseite des Aufzeichnungsblattes zu drucken,
so dass das Druckgerät dazu eingerichtet ist, gleichzeitig die Strichcode-Erfassungstätigkeit und die Druck-Tätigkeit der Buchungsinformationen auszuführen.

2. Druckgerät nach Anspruch 1, bei dem die Sensorwert-Ausgabeeinheit (28) dazu eingerichtet ist, den Blattsensor (33) zu veranlassen, Markierungspositionen zu erfassen, die auf die Rückseite des Aufzeichnungsblattes gedruckt sind, und
die Steuereinheit (21) dazu eingerichtet ist, die Druckeinheit (32) zu veranlassen, die Buchungsinformationen innerhalb eines Bereiches auf der Oberseite des Aufzeichnungsblattes zu drucken, wobei der Bereich auf der Oberseite des Aufzeichnungsblattes einem Bereich entspricht, der auf der Rückseite des Aufzeichnungsblattes zwischen der Markierungsposition, die von dem Blattsensor erfasst wird, und einer folgenden Markierungsposition definiert ist, die von dem Blattsensor zu erfassen ist.

3. Druckgerät nach Anspruch 1, weiterhin enthaltend:
eine Speichereinheit (25) zum Speichern von Informationen, wobei die Steuereinheit (21) dazu eingerichtet ist, die Buchungsinformationen, die auf das Aufzeichnungsblatt durch die Druckeinheit (32) gedruckt werden, den Strichcodes zuzuordnen, die von dem Blattsensor (33) erfasst werden, und in der Speichereinheit die Buchungsinformationen sowie die Strichcodes, die einander zugeordnet sind, zu speichern.

## Revendications

1. Dispositif d'impression destiné à imprimer des informations d'étiquetage sur une feuille d'enregistrement (P), comprenant :
une unité opérationnelle (22) destinée à entrer les informations d'étiquetage,
une unité d'affichage (23) destinée à afficher les informations d'étiquetage entrées par l'intermédiaire de l'unité opérationnelle,
une unité de déplacement (34) destinée à déplacer la feuille d'enregistrement (P),
un capteur de feuille (33) destiné à détecter des codes à barres imprimés sur le verso de la feuille d'enregistrement, et
une unité d'impression (32) destinée à imprimer les informations d'étiquetage ligne de point par ligne de point sur la feuille d'enregistrement,
**caractérisé en ce que** :
ledit dispositif d'impression comprend, en outre :
un moyen de déplacement adapté de telle sorte que l'unité de déplacement (34) déplace la feuille d'enregistrement de manière intermittente sur une longueur correspondant à une ligne de point à imprimer par l'unité d'impression ; et
une unité de production de valeur de capteur (28) adaptée de telle sorte que le capteur de feuille (33) détecte, chaque fois que la feuille d'enregistrement est déplacée de ladite longueur, les données de code à barres respectives d'un code à barres imprimé sur le verso de la feuille d'enregistrement ; et
une unité de commande (21) adaptée de telle sorte que l'unité d'impression (32) imprime les informations d'étiquetage, saisies par l'unité opérationnelle, ligne de point par ligne de point sur une surface supérieure de la feuille d'enregistrement,
de telle sorte que ledit dispositif d'impression est adapté de manière à exécuter simultanément l'opération de détection de code à barres et l'opération d'impression des informations d'étiquetage.

2. Dispositif d'impression selon la revendication 1, dans lequel l'unité de production de valeur de capteur (28) est adaptée de telle sorte que le capteur de feuille (33) détecte des parties de marqueur imprimées sur le verso de la feuille d'enregistrement, et
l'unité de commande (21) est adaptée de telle sorte que l'unité d'impression (32) imprime les informations d'étiquetage à l'intérieur d'une zone sur la surface supérieure de la feuille d'enregistrement, dans lequel la zone sur la surface supérieure de la feuille d'enregistrement correspond à une zone qui est définie sur le verso de la feuille d'enregistrement entre la partie de marqueur détectée par le capteur de feuille et une partie de marqueur suivante à détecter par le capteur de feuille.

3. Dispositif d'impression selon la revendication 1, comprenant en outre :
une unité de mémorisation (25) destinée à mémoriser des informations, dans laquelle l'unité de commande (21) est adaptée de manière à associer les informations d'étiquetage imprimées sur la feuille d'enregistrement par l'unité d'impression (32) avec les codes à barres détectés par le capteur de feuille (33), et à mémoriser dans l'unité de mémorisation les informations d'étiquetage et les codes à barres associés les uns aux autres.
